# EUROPEAN PATENT APPLICATION

(11) **EP 2 713 252 A2**
(43) Date of publication of application: **02.04.2014**
(21) Application number: 11855996.2
(22) Date of filing: 16.11.2011
(51) Int. Cl.: G06F 3/048

(54) **OPERATION INTERFACE MANAGEMENT METHOD, APPARATUS AND MOBILE TERMINAL**

(71) Applicant: Huawei Device Co., Ltd., Longgang District Shenzhen Guangdong 518129 (CN)
(72) Inventor: ZHANG, Xiaopeng, Guangdong 518129 (CN)
(74) Representative: Epping - Hermann - Fischer
(86) International application number: PCT/CN2011/082262
(87) International publication number: WO 2012/097636

(57) **Abstract**

A method, an apparatus, and a mobile terminal for operation interface management are disclosed. The method includes: receiving an operation interface invoking instruction input by a user, and generating an operation interface corresponding to the operation interface invoking instruction; and receiving a function item startup instruction input by the user and according to the operation interface, and starting up a function item specified by the function item startup instruction. In the present invention, as long as the user inputs the operation interface invoking instruction, the corresponding operation interface may be generated, and a corresponding function item startup instruction may be input according to the operation interface, so that a target function item may be started up quickly, accurately, and efficiently. Therefore, communication with a contact can be performed quickly and conveniently through a contact dial in a contact operation interface; and a corresponding application may be executed quickly and conveniently according to an application dial in an application operation interface, thereby improving user experience greatly. Furthermore, desktop space is saved in a manner of generating the contact dial and the application dial.

## Description

### FIELD OF THE INVENTION

The present invention relates to the field of computer software, and in particular, to a method, an apparatus, and a mobile terminal for operation interface management.

### BACKGROUND OF THE INVENTION

At present, the application of a touch screen in a mobile terminal such as a mobile phone is getting wider and wider. Usually, when a call is made by using a touch screen phone, a digital dial generally appears on a screen of the mobile phone, and a user dials a phone number of a contact by touching numbers on the digital dial.

With the development of science and technology and the popularization of a smart phone, the functions of the mobile phone are getting stronger and stronger. At the same time, with the diversity of life demands of people and the extension of the social circle, applications and contacts in an address book of the mobile phone are getting more and more. Therefore, how to quickly find an application or contact needed by the user becomes an important index of the performance of the mobile phone, and is also a key point of user experience.

In most of the existing smart phones, icons of the contacts and icons of the applications are put on the desktop of the mobile phone, and the user makes a call to a contact by clicking a contact icon, or executes a corresponding application by clicking an application icon. However, since the display screen of the mobile terminal such as the mobile phone has a limit after all, it is difficult to put all of the icons of the contacts and the icons of the applications on the desktop of the mobile phone; furthermore, even if all of the icons of the contacts and the icons of the applications are put on the desktop of the mobile phone, not only the desktop space is occupied, but also the user can find the needed contact or application only through multiple search means such as lookup. In this way, for the existing mobile phone, it is inconvenient for the user to quickly find a contact to make a call, it is also inconvenient for the user to quickly find an application and then execute it, and the desktop space is occupied.

### SUMMARY OF THE INVENTION

The objective of the present invention is to provide a method, an apparatus, and a mobile terminal for operation interface management, and aims to solve problems of the existing mobile phone that it is inconvenient for a user to quickly find a contact to make a call, it is also inconvenient for the user to quickly find an application and then execute it, and desktop space is occupied.

In one aspect, an operation interface management method is provided, where the method includes the following steps:
receiving an operation interface invoking instruction input by a user, and generating an operation interface corresponding to the operation interface invoking instruction; and
receiving a function item startup instruction input by the user and according to the operation interface, and starting up a function item specified by the function item startup instruction.

In another aspect, an operation interface management apparatus is provided, where the apparatus includes:
a dial generating unit, configured to receive an operation interface invoking instruction input by a user, and generate an operation interface corresponding to the operation interface invoking instruction; and
a function item startup unit, configured to receive a function item startup instruction input by the user and according to the operation interface, and start up a function item specified by the function item startup instruction.

In another aspect, a mobile terminal including the operation interface management apparatus is provided.

In embodiments of the present invention, as long as the user inputs the operation interface invoking instruction, the operation interface corresponding to the operation interface invoking instruction can be generated, and a corresponding function item startup instruction can be input according to the operation interface, so that a target function item can be started up quickly, accurately, and efficiently. Therefore, communication with a corresponding contact can be performed conveniently and quickly through a contact dial in a contact operation interface; and a corresponding application can also be executed conveniently and quickly according to an application dial in an application operation interface, thereby improving user experience greatly. Furthermore, desktop space is saved in a manner of generating the contact dial and the application dial in the embodiments of the present invention.

### BRIEF DESCRIPTION OF THE DRAWINGS

FIG. 1 is a flow chart of an operation interface management method according to an embodiment of the present invention;
FIG. 2 is an example diagram of a frequent contact dial according to an embodiment of the present invention;
FIG. 3 is an example diagram of a frequent application dial according to an embodiment of the present invention;
FIG. 4 is an example diagram of a digital dial according to an embodiment of the present invention; and
FIG. 5 is a schematic diagram of an operation interface management apparatus according to an embodiment of the present invention.

### DETAILED DESCRIPTION OF THE EMBODIMENTS

To make the objectives, technical solutions, and advantages of the present invention clearer, the present invention is further described in detail in the following with reference to the accompanying drawings and embodiments. It should be understood that the specific embodiments described here are only used to illustrate the present invention and are not intended to limit the present invention.

In embodiments of the present invention, an operation interface invoking instruction input by a user is received, an operation interface corresponding to the operation interface invoking instruction is generated, and a function item specified by a function item startup instruction is started up after receiving the function item startup instruction input by the user and according to the operation interface. Therefore, a corresponding contact can be directly called through a contact dial in a contact operation interface, and a corresponding application can be directly started up according to an application dial in an application operation interface.

In order to illustrate the technical solutions according to the present invention, illustration is provided in the following through specific embodiments.

### Embodiment 1

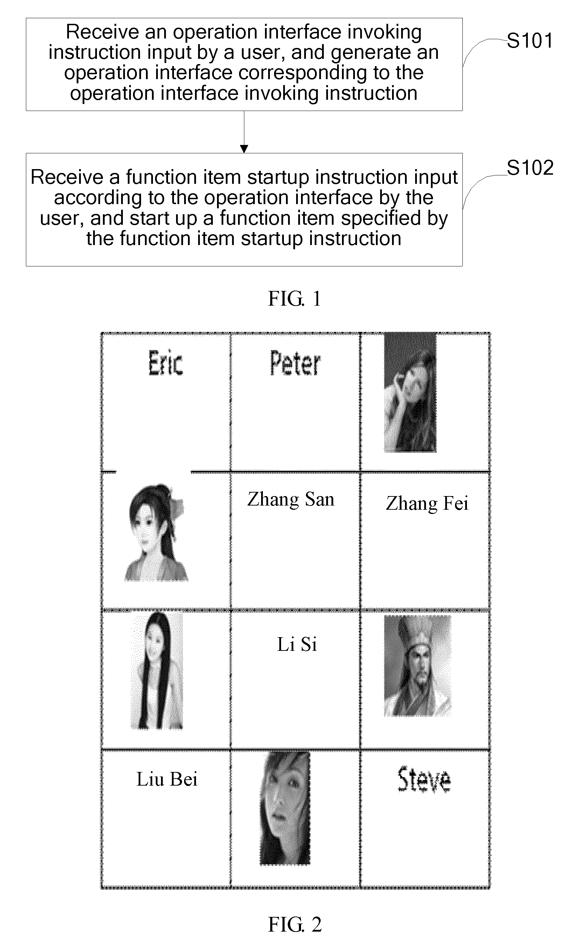

FIG. 1 is a flow chart of an operation interface management method according to the present invention. For the convenience of description, only a part related to the embodiment of the present invention is shown.

Step S101: Receive an operation interface invoking instruction input by a user, and generate an operation interface corresponding to the operation interface invoking instruction.

The operation interface invoking instruction includes, but is not limited to, a contact interface invoking instruction, an application interface invoking instruction, or a digital dialing interface invoking instruction. The operation interface includes, but is not limited to, a contact operation interface, an application operation interface, and a digital dialing operation interface. The contact interface invoking instruction is configured to invoke the contact operation interface; the application interface invoking instruction is configured to invoke the application operation interface; and the digital dialing interface invoking instruction is configured to invoke the digital dialing operation interface.

The step of generating the operation interface corresponding to the operation interface invoking instruction is specifically:

When the operation interface invoking instruction is the contact interface invoking instruction, a contact dial generated, where names and/or photos of contacts are displayed on the contact dial, so as to generate the contact operation interface.

The contact dial may be a frequent contact dial, and contacts displayed on the frequent contact dial are pre-configured by the user or obtained by making statistics of usage frequencies of contacts. Referring to FIG. 2, it is an example diagram of a frequent contact dial according to an embodiment of the present invention, but the frequent contact dial is not limited to the example diagram.

The manner of pre-configuring, by the user, the contacts displayed on the frequent contact dial is specifically: receiving a contact setting instruction input by the user, and setting one or more contacts specified by the contact setting instruction as the contacts displayed on the frequent contact dial. In this way, each time when the user inputs the contact interface invoking instruction, the contacts specified through the contact setting instruction by the user can be output through the contact dial in the contact operation interface, so that it is convenient for the user to select a target contact from the output contacts.

The manner of obtaining the contacts displayed on the frequent contact dial by making statistics of the usage frequencies of the contacts in a mobile terminal is specifically: setting the first N contacts with highest frequencies as the contacts displayed on the frequent contact dial by making statistics of one of a calling frequency, a message sending frequency, and an Email usage frequency of a contact in the mobile terminal, where N is greater than or equal to 1; or setting N contacts with the highest vector sums as the contacts displayed on the frequent contact dial by making statistics of a vector sum of at least two of a calling frequency, a message sending frequency, and an Email usage frequency of a contact in the mobile terminal, where N is greater than or equal to 1. The vector sum refers to: the same or different proportions are set for each item in statistics, respectively, and a sum of the proportions is 100%; if making statistics of the usage frequency of the contact is making statistics of the calling frequency, the message sending frequency, and the Email usage frequency of the contact, where the proportion of the calling frequency of the contact is 60%, the proportion of the message sending frequency is 20%, and the proportion of the Email usage frequency is 20%, and after it is obtained through making statistics that an actual calling frequency is x, an actual message sending frequency is y, and an actual Email usage frequency is z, the vector sum H is then: H=x*60%+y*20%+z*20%. When the statistics of the usage frequencies of the contacts in the mobile terminal are made, statistics of the number of usage of the contacts in a period of time in the mobile terminal may be made. For example, the usage frequency may be the number of usage in one week, or the number of usage in one month.

When the operation interface invoking instruction is the application interface invoking instruction, an application dial is generated, where application names and/or application icons are displayed on the application dial, so as to generate the application operation interface.

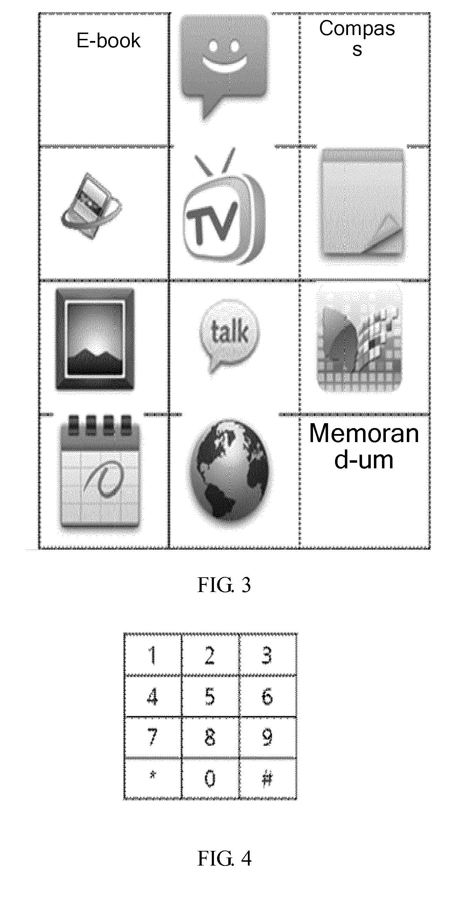

The application dial may be a frequent application dial. Applications displayed on a frequent application dial are pre-configured by the user or obtained by making statistics of usage frequencies of applications. Referring to FIG. 3, it is an example diagram of the frequent application dial according to an embodiment of the present invention, but the frequent application dial is not limited to the example diagram.

The manner of pre-configuring, by the user, the applications displayed on the frequent application dial is specifically: receiving an application setting instruction input by the user, and setting one or more applications specified by the application setting instruction as the applications on the frequent application dial. In this way, each time when the user inputs the application interface invoking instruction, the application names and/or the application icons specified through the application setting instruction by the user may be output through generating the application dial in the application operation interface, so that it is convenient for the user to select a target application from the output application names and/or application icons.

The manner of obtaining the applications displayed on the frequent application dial by making statistics of the usage frequencies of the applications in the mobile terminal is specifically: setting the first M applications with highest usage frequencies as the applications in an application list by making statistics of the usage frequencies of the applications in the mobile terminal, where M is greater than or equal to 1.

When the operation interface invoking instruction is the digital dialing interface invoking instruction, a digital dial is generated, where numbers for dialing are displayed on the digital dial, so as to generate a digital dialing interface.

Referring to FIG. 4, it is an example diagram of a digital dial according to an embodiment of the present invention, but the digital dial is not limited to the example diagram.

Step S102: Receive a function item startup instruction input by the user and according to the operation interface, and start up a function item specified by the function item startup instruction.

In the embodiment of the present invention, the manner of inputting the function item startup instruction by the user according to the operation interface includes, but is not limited to, at least one of the followings: inputting, by the user, the function item startup instruction by touching a display screen or clicking keys. The function item startup instruction includes: a communication instruction or an application startup instruction. The communication instruction includes, but is not limited to, a short message/multimedia message sending instruction, a call instruction, an Email sending instruction, and so on.

In the embodiment of the present invention, if the user sends the function item startup instruction to the contact dial in the contact operation interface or the digital dial in the digital dialing operation interface, it is the communication instruction; and if the user sends the function item startup instruction to the application dial in the application operation interface, it is the application startup instruction. When the call instruction sent by the user is received, a call is initiated according to a contact number of the contact specified by the call instruction or a call is initiated according to a contact number specified by the call instruction; and when the application startup instruction sent by the user is received, the application specified by the application startup instruction is started up.

In the embodiment of the present invention, as long as the user inputs the operation interface invoking instruction, the operation interface corresponding to the operation interface invoking instruction can be generated, and a corresponding function item startup instruction can be input according to the operation interface, so that a target function item can be started up quickly, accurately, and efficiently. Particularly, the user may set contacts contacted frequently as the contacts in the contact list. The contact dial can be generated by inputting the contact operation interface invoking instruction, and the contact list is output in the contact dial, so that the user can quickly and accurately find a contact that the user needs to communicate with (for example, send a short message, make a call, and so on). The user may also set applications which need to be started up frequently as the applications in the application list. The application dial can be generated by inputting the application operation interface invoking instruction, and the application list is output in the application dial, so that the user can quickly and accurately find an application that needs to be started up, thereby improving user experience greatly. Furthermore, desktop space is saved in a manner of generating the contact dial and the application dial in the embodiment of the present invention.

Preferentially, the operation interface management method further includes:
receiving an interface switching instruction sent by the user, where the interface switching instruction specifies an operation interface that needs to be switched to; and
switching from a current operation interface to the operation interface specified by the interface switching instruction.

In the embodiment of the present invention, if the user needs to invoke another type of functions when performing function invoking of the mobile terminal by using the current operation interface; for example, the user needs to start up a certain application provided by the mobile terminal in the process of performing a digital dialing operation by using the digital dial in the digital dialing operation interface to invoke the digital dialing function provided by the mobile terminal, in this case, the user is required to input the interface switching instruction on the current operation interface, so as to switch from the current operation interface of the mobile terminal to the operation interface specified by the interface switching instruction, for example, input the interface switching instruction on the digital dialing operation interface, so as to switch from the digital dialing operation interface of the mobile terminal to the application operation interface, so that the user, according to the application operation interface, quickly selects the application that needs to be started up. The manner of inputting the interface switching instruction by the user includes, but is not limited to, sending, by the user, the interface switching instruction on the current operation interface by touching an icon; or sending, by the user, the interface switching instruction on the current operation interface by sliding a dial; or sending, by the user, the interface switching instruction on the current operation interface by pressing left and right keys (such as left and right arrow keys).

In the embodiment of the present invention, switching can be randomly performed among multiple operation interfaces by inputting the interface switching instruction on the current operation interface. For example, the current operation interface can be switched from the digital dialing operation interface to the contact operation interface with the contact dial or the application operation interface with the application dial by inputting the interface switching instruction on the digital dialing operation interface with the digital dial, so that the user may perform the switching among multiple operation interfaces with different dials, thereby bringing convenience for the user to invoke different types of functions of the mobile terminal, and avoiding complexity of exiting from one operation interface before entering another operation interface.

### Embodiment 2

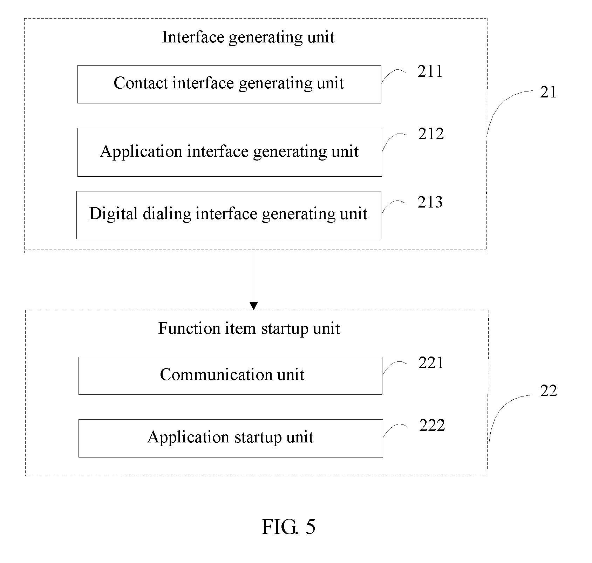

FIG. 5 is a schematic structural diagram of an operation interface management apparatus according to an embodiment of the present invention. For the convenience of description, only a part related to the embodiment of the present invention is shown. The apparatus may be a software unit, a hardware unit, or a unit combined by software and hardware which are built in a mobile terminal such as a mobile phone, or may be integrated into a mobile terminal or an application system of the mobile terminal as an independent widget.

An operation interface generating unit 21 is configured to receive an operation interface invoking instruction input by a user and generate an operation interface corresponding to the operation interface invoking instruction.

The operation interface invoking instruction includes, but is not limited to, a contact interface invoking instruction, an application interface invoking instruction, or a digital dialing interface invoking instruction. The operation interface includes, but is not limited to, a contact operation interface, an application operation interface, and a digital dialing operation interface. The contact interface invoking instruction is configured to invoke the contact operation interface; the application interface invoking instruction is configured to invoke the application operation interface; and the digital dialing interface invoking instruction is configured to invoke the digital dialing operation interface.

In the embodiment of the present invention, the operation interface generating unit 21 includes a contact interface generating unit 211, an application interface generating unit 212, and a digital dialing interface generating unit 213.

The contact interface generating unit 211 is configured to generate a contact dial when the operation interface invoking instruction is the contact interface invoking instruction, where names and/or photos of contacts are displayed on the contact dial, so as to generate the contact operation interface. The contact dial may be a frequent contact dial, and contacts displayed on the frequent contact dial are pre-configured by the user or obtained by making statistics of usage frequencies of contacts. The specific process is as described in the foregoing, and is not repeatedly described here again.

The application interface generating unit 212 is configured to generate an application dial when the operation interface invoking instruction is the application interface invoking instruction, where application names and/or application icons are displayed on the application dial, so as to generate the application operation interface. The application dial may be a frequent application dial. Applications displayed on the frequent application dial are pre-configured by the user or obtained by making statistics of usage frequencies of applications. The specific process is as described in the foregoing, and is not repeatedly described here again.

The digital dialing interface generating unit 213 is configured to generate a digital dial when the operation interface invoking instruction is the digital dialing interface invoking instruction, where numbers for dialing are displayed on the digital dial, so as to generate the digital dialing interface.

A function item startup unit 22 is configured to receive a function item startup instruction input by the user and according to the operation interface, and start up a function item specified by the function item startup instruction.

In the embodiment of the present invention, the manner of inputting the function item startup instruction by the user according to the operation interface includes, but is not limited to, at least one of the followings: inputting, by the user, the function item startup instruction by touching a display screen or clicking keys. The function item startup instruction includes: a communication instruction or an application startup instruction. The communication instruction includes, but is not limited to, a short message/multimedia message sending instruction, a call instruction, an Email sending instruction, and so on.

In the embodiment of the present invention, if the user sends the function item startup instruction to the contact dial in the contact operation interface or the digital dial in the digital dialing operation interface, it is the communication instruction; and if the user sends the function item startup instruction to the application dial in the application operation interface, it is the application startup instruction.

In the embodiment of the present invention, the function item startup unit 22 includes a communication unit 221 and an application startup unit 222.

When receiving the communication instruction sent by the user, the communication unit 221 initiates a communication connection according to a contact number of a contact specified by the communication instruction or initiates a communication connection according to a contact number specified by the communication instruction. The communication connection may be sending a short message or a multimedia message to a specified contact, calling a specified contact, or sending an Email to a specified contact, and so on.

When receiving the application startup instruction sent by the user, the application startup unit 222 starts up an application specified by the application startup instruction.

Preferentially, the operation interface management apparatus further includes an interface switching unit 23. When receiving an interface switching instruction that is sent by the user and specifies an operation interface that needs to be switched to, the interface switching unit 23 switches a current operation interface to the operation interface specified by the interface switching instruction.

A function item dial switching instruction input by the user includes, but is not limited to, a dial switching instruction sent by the user by touching an icon; or a dial switching instruction sent by the user by sliding a dial; or a dial switching instruction sent by the user by pressing left and right keys (such as left and right arrow keys).

In the embodiment of the present invention, as long as the user inputs the operation interface invoking instruction, the operation interface corresponding to the operation interface invoking instruction can be generated, and a corresponding function item startup instruction can be input according to the operation interface, so that a target function item can be started up quickly, accurately, and efficiently. Therefore, communication with a corresponding contact can be performed conveniently and quickly through the contact dial in the contact operation interface; and a corresponding application can also be started up conveniently and quickly according to the application dial in the application operation interface, thereby improving user experience greatly. Furthermore, desktop space is saved in a manner of generating the contact dial and the application dial in the embodiment of the present invention.

The units included in the foregoing apparatus embodiment are divided just according to function logic, but they are not limited to the foregoing division, as long as corresponding functions can be realized; in addition, specific names of the functional units are merely provided for the convenience of distinguishing the units from one another, but not intended to limit the protection scope of the present invention.

Persons skilled in the art may understand that in the method for executing the function item provided in the embodiments of the present invention, all or a part of the steps of the method may be completed by a program instructing relevant hardware. For example, the steps may be completed by a computer running program. The program may be stored in a readable storage medium, such as a random access memory, a magnetic disk, and a compact disk.

## Claims

1. An operation interface management method, wherein the method comprises the following steps:
receiving an operation interface invoking instruction input by a user, and generating an operation interface corresponding to the operation interface invoking instruction; and
receiving a function item startup instruction input by the user and according to the operation interface, and starting up a function item specified by the function item startup instruction.

2. The method according to claim 1, wherein the operation interface invoking instruction comprises a contact interface invoking instruction, an application interface invoking instruction, and a digital dialing interface invoking instruction; and the operation interface comprises a contact operation interface, an application operation interface, and a digital dialing operation interface.

3. The method according to claim 2, wherein the step of the receiving the operation interface invoking instruction input by the user and generating the operation interface corresponding to the operation interface invoking instruction is specifically:
generating a contact dial when the operation interface invoking instruction is the contact interface invoking instruction, wherein names and/or photos of contacts are displayed on the contact dial, so as to generate the contact operation interface;
generating an application dial when the operation interface invoking instruction is the application interface invoking instruction, wherein application names and/or application icons are displayed on the application dial, so as to generate the application operation interface; and
generating a digital dial when the operation interface invoking instruction is the digital dialing interface invoking instruction, wherein numbers for dialing are displayed on the digital dial, so as to generate the digital dialing interface.

4. The method according to claim 3, wherein the contact dial is a frequent contact dial; frequent contacts are contacts pre-configured by the user or are obtained by making statistics of usage frequencies of contacts.

5. The method according to claim 4, wherein the obtaining, the contacts displayed on the frequent contact dial, by making statistics of the usage frequencies of the contacts in a mobile terminal specifically comprises:
making statistics of one of a calling frequency, a message sending frequency, and an Email usage frequency of a contact in the mobile terminal, and setting the first N contacts with the highest frequencies as the contacts displayed on the frequent contact dial, wherein N is greater than or equal to 1; or
making statistics of a vector sum of at least two of a calling frequency, a message sending frequency, and an Email usage frequency of a contact in the mobile terminal, and setting N contacts with the highest vector sums as the contacts displayed on the frequent contact dial, wherein N is greater than or equal to 1.

6. The method according to claim 1, wherein the function item startup instruction comprises a communication instruction and an application startup instruction; the communication instruction comprises a short message/multimedia message sending instruction, a call instruction, and an Email sending instruction.

7. The method according to claim 1, wherein a manner of inputting the function item startup instruction by the user according to the operation interface comprises:
inputting, by the user, the function item startup instruction by touching a display screen or clicking keys; or
inputting, by the user, the function item startup instruction by clicking keys.

8. The method according to claim 1, wherein the step of the receiving the function item startup instruction input by the user and according to the operation interface, and starting up the function item specified by the function item startup instruction is specifically:
if receiving the function item startup instruction sent by the user and according to a contact dial in a contact operation interface or a digital dial in a digital dialing operation interface, which is a communication instruction, in this case, initiating a communication connection according to a contact number of a contact specified by the communication instruction, or initiating a communication connection according to a contact number specified by the communication instruction; and
if receiving the function item startup instruction sent by the user and according to an application dial in an application operation interface, which is an application startup instruction, in this case, starting up an application specified by the application startup instruction.

9. The method according to claim 1, wherein after the step of the receiving the operation interface invoking instruction input by the user and generating the operation interface corresponding to the operation interface invoking instruction, the method further comprises the following steps:
receiving an interface switching instruction sent by the user, wherein the interface switching instruction specifies an operation interface that needs to be switched to; and
switching from a current operation interface to the operation interface specified by the interface switching instruction.

10. The method according to claim 9, wherein a manner of inputting the interface switching instruction by the user comprises: sending, by the user, the interface switching instruction by touching an icon on the current operation interface; sending, by the user, the interface switching instruction by sliding a dial on the current operation interface; or sending, by the user, the interface switching instruction through left and right arrow keys on the current operation interface.

11. An operation interface management apparatus, comprising:
an operation interface generating unit, configured to receive an operation interface invoking instruction input by a user, and generate an operation interface corresponding to the operation interface invoking instruction; and
a function item startup unit, configured to receive a function item startup instruction input by the user and according to the operation interface, and start up a function item specified by the function item startup instruction.

12. The apparatus according to claim 11, wherein the operation interface invoking instruction comprises a contact interface invoking instruction, an application interface invoking instruction, and a digital dialing interface invoking instruction; and the operation interface comprises a contact operation interface, an application operation interface, and a digital dialing operation interface.

13. The apparatus according to claim 11, wherein the operation interface generating unit comprises:
a contact interface generating unit, configured to generate a contact dial when the operation interface invoking instruction is a contact interface invoking instruction, wherein names and/or photos of contacts are displayed on the contact dial, so as to generate a contact operation interface;
an application interface generating unit, configured to generate an application dial when the operation interface invoking instruction is an application interface invoking instruction, wherein application names and/or application icons are displayed on the application dial, so as to generate an application operation interface; and
a digital dialing interface generating unit, configured to generate a digital dial when the operation interface invoking instruction is a digital dialing interface invoking instruction, wherein numbers for dialing are displayed on the digital dial, so as to generate a digital dialing interface.

14. The apparatus according to claim 11, wherein the function item startup unit comprises:
a communication unit, configured to, when receiving the function item startup instruction sent by the user and according to a contact dial in a contact operation interface or a digital dial in a digital dialing operation interface, which is a communication instruction, in this case, initiate a communication connection according to a contact number of a contact specified by the communication instruction, or initiate a communication connection according to a contact number specified by the communication instruction; and
an application startup unit, configured to, when receiving the function item startup instruction sent by the user and according to an application dial in an application operation interface, which is an application startup instruction, in this case, start up an application specified by the application startup instruction.

15. The apparatus according to claim 11, further comprising:
a dial switching unit, configured to receive an interface switching instruction sent by the user, wherein the interface switching instruction specifies an operation interface that needs to be switched to; and switch from a current operation interface to the operation interface specified by the interface switching instruction.

16. A mobile terminal, comprising the operation interface management apparatus according to any one of claims 11 to 15.
